# EUROPEAN PATENT APPLICATION

(11) **EP 2 525 085 A2**
(43) Date of publication of application: **21.11.2012**
(21) Application number: 12167465.9
(22) Date of filing: 10.05.2012
(51) Int. Cl.: F03D 7/02

(54) **A wind turbine and wind turbine blade**

(30) Priority: 19.05.2011 DK 201170248
(71) Applicant: Envision Energy (Denmark) ApS, 8600 Silkeborg (DK)
(72) Inventor: Varming Rebsdorf, Anders, 8660 Skanderborg (DK)
(74) Representative: Gregersen, Niels Henrik

(57) **Abstract**

A method for controlling a two-bladed pitchable swept-blade wind turbine in extreme wind conditions is described, wherein when extreme conditions are detected or forecast for the wind turbine, the wind turbine blades are pitched such that they will stabilise in a substantially horizontal arrangement. The blades can be yawed such that the tip ends of the wind turbine blades point in the same direction towards the surface level, thereby lowering the centre of mass of the rotor assembly of the wind turbine blades and the rotor hub. The lower centre of mass of the assembly results in the stabilisation of the blades in a substantially horizontal position, resulting in a reduced surface area of the blades exposed to the extreme wind forces. This reduced surface area provides for a reduction in the extreme loads which may be experienced by the wind turbine in such extreme wind conditions.

## Description

### Field of the Invention

The present invention relates to a wind turbine and a method of controlling such a wind turbine, in particular a method of controlling a wind turbine to reduce maximum loads experienced by the wind turbine during extreme wind conditions.

### Background of the Invention

Wind turbines can often be located in areas having relatively predictable wind patterns, e.g. varying between ∼15-25 m/s. However, during storm conditions wind speeds can often reach extreme levels capable of damaging wind turbine structures. For example, off-shore wind turbine installations may experience typhoon or hurricane conditions, wherein the wind speed may exceed 70 m/s during gusts. The high wind speeds mean that wind turbines intended for a site susceptible to extreme wind conditions have to be constructed with sturdier materials and/or additional reinforcement elements, in order to withstand the effects of the high winds possible in such areas, and to be rated suitable for use in the locations in question. Furthermore, high wind speeds during gusts can result in significant fatigue loads in the structural components of the wind turbine, which can lead to additional wear-and-tear on the wind turbine structure. Accordingly, it is of interest to find ways to reduce the impact of extreme wind conditions on wind turbines.

European Patent Application Publication No. 0 709 571 describes a two-bladed partial pitch wind turbine which reduces the effect of extreme wind conditions. The turbine comprises first and second rotor blades, having inner and outer blade sections, the outer blade sections pitchable relative to the inner blade sections. During high winds, the rotor blades are parked in a substantially horizontal alignment, and the outer section of the first blade is pitched to be at a 90 degree angle to the inner section of the first blade, while the outer section of the second blade is unpitched. The azimuth or yaw brake is released, and the rotor structure comprising the first and second rotor blades acts as a wind vane when exposed to high winds. As a result, the rotor is moved about the yaw axis such that the tip end of the first rotor blade is pointing directly into the oncoming wind, and consequently presents a reduced surface area against which the wind acts on. The reduced surface area results in reduced forces on the turbine during the high wind conditions, and reduced loading in the wind turbine structure.

Several problems exist for this solution however. For the wind turbine blades to be provided in a horizontal alignment, sophisticated positioning and braking and/or locking systems are employed in the turbine. These braking/locking systems may experience significant fatigue loads during operation, due to the high wind levels experienced. Accordingly, such systems may require regular maintenance to ensure efficient operation

It is an object of the invention to provide a wind turbine and an associated control method which provides improved performance at high wind speeds leading to extreme loads, and which overcomes the above problems.

### Summary of the Invention

Accordingly, there is provided a method for reducing wind loads in a pitchable two-bladed swept-blade wind turbine during extreme wind conditions, the wind turbine comprising a rotor assembly operable to rotate about a pivot point, the rotor assembly having a rotor hub and first and second wind turbine blades of at least 35 metres length mounted to said rotor hub, wherein the tip ends of the wind turbine blades are swept relative to the central axis of the blades, the method comprising the steps of:
providing the wind turbine blades in a substantially horizontal alignment; wherein said step comprises pitching at least a portion of the swept sections of the rotor blades to move the centre of mass of the rotor assembly relative to the pivot point for the rotor assembly, such that the rotor assembly will stabilise in an equilibrium position wherein said rotor blades are in a substantially horizontal alignment and wherein the centre of mass of said rotor assembly is lowered relative to the pivot point of said rotor assembly when in said substantially horizontal alignment; and
aligning the substantially horizontal wind turbine blades such the blades are longitudinally aligned with the wind direction at the turbine to reduce the extreme wind loads experienced by the wind turbine blades.

As the rotor blades are aligned with the wind direction such that one of rotor blades effectively points into the direction of the oncoming wind, this reduces the surface area of the blades acted on by the extreme winds, and accordingly reduces the magnitude of the extreme loads experienced by the turbine structure. The swept blade design means that by appropriate pitching of the blades, the centre of mass of the rotor assembly can be moved relative to the pivot point about which the rotor assembly rotates. Accordingly, the blades are pitched such that the centre of mass of the wind turbine blades will be at its lowest point when in a substantially horizontal position. As a result, the rotor blades will rotate until they balance in an equilibrium position, which will be the position along the rotational path of the wind turbine blades having the lowest centre of mass. Thus, the rotor assembly will naturally balance out in a stable horizontal position.

Furthermore, due to the lowering of the centre of mass relative to the pivot point of the rotor assembly, the blades will be provided in a more stable horizontal position than unpitched blades provided horizontally, as the lower centre of mass will act to resist unwanted rotation of the wind turbine blades from the horizontal equilibrium position.

Preferably, said step of pitching comprises pitching the blades such that the tip ends of the blades point in substantially opposite directions along the rotational path of the wind turbine rotor blades.

As the blades are pitched such that the blade tip ends point in opposite directions along the path of rotation, this means that the tip ends will both point to the same side of the rotor assembly. Accordingly, the rotor assembly will be balanced towards that first side, and will under the force of gravity naturally seek an equilibrium position wherein that first side of the rotor assembly is lowest towards ground, said tip ends pointing towards the surface level.

Preferably, said wind turbine comprises first and second pitch systems operable to pitch at least a portion of said first and second wind turbine blades respectively and wherein the wind turbine further comprises a controller operable to control said first and second pitch systems to pitch at approximately equivalent pitch angles, and wherein said step of pitching comprises applying an offset of approximately +/- 180 degrees to said second pitch system.

Applying such an offset ensures that the tip ends will point in opposite directions along the path of rotation. By simply introducing a 90 degree offset into the input to the pitching system, the method may be relatively easily applied to existing wind turbines, removing the need for additional relatively complicated control circuitry and/or pitch systems.

Preferably, the wind turbine comprises a first blade having a first swept tip end and a second blade having a second swept tip end, and wherein the step of pitching comprises pitching said first blade such that said first swept tip end has a pitch angle of between approximately 85 to 95 degrees (preferably approximately 90 degrees) and pitching said second blade such that said second swept tip end has a pitch angle of between approximately -85 to -95 degrees (preferably approximately -90 degrees).

The use of such pitch angles will provide for a rotor assembly wherein the tip ends will point in substantially opposite directions along the path of rotation. It will be understood that the rotor assembly may not be precisely balanced at the pivot point of the rotor assembly (e.g. due to varied weight distribution, manufacturing variations, etc.), accordingly it may be preferably that the pitch angles of the blade sections may be adjusted about the +/- 90 degree mark to accurately balance the rotor assembly in a horizontal position.

Preferably, the method further comprises the step of adjusting the weight distribution of the rotor assembly to stabilise the rotor assembly in a substantially horizontal arrangement. Preferably, the method comprises the step of increasing the weight of the rotor assembly to increase the inertia of the rotor assembly, and/or lower the centre of mass of the rotor assembly.

Increased weight will lead to an increase in rotor assembly inertia, acting to resist rotation of the blades from the stable equilibrium position of horizontal alignment.

An example of such an operation may include (but is not limited to) pumping a liquid into a cavity provided in the wind turbine blades, preferably provided in the swept sections of said blades, preferably provided towards the tip ends of said blades. By pumping a liquid into the blades, the weight of the rotor assembly, and preferably the weight provided in the tip ends of the blades pointing towards the surface level, will increase. This provides an increase in inertia of the rotor assembly, stabilising the blades in the horizontal position.

Increasing the weight distribution below the central longitudinal axis of the rotor assembly will act to further lower the centre of mass from the pivot point of the rotor assembly, leading to an increase in the stability of the rotor assembly when in the substantially horizontal position.

Another example may include actuating a moveable weight provided on a pinion mechanism provided in said blades, to adjust the weight distribution of the blades.

It will be understood that the step of adjusting the weight distribution may be performed in parallel with said step of pitching. Alternatively, this step may be performed when the rotor assembly is provided in said substantially horizontal position.

Preferably, the method further comprises the step of initially applying a braking force to a rotating rotor assembly to reduce rotational momentum of the rotor assembly, and wherein said step of pitching is performed when the rotational speed of the wind turbine blades falls below a pre-defined limit speed.

The wind turbine blades may be initially slowed using brakes to reduce rotational momentum, with the blades pitched once the speed drops below a safe level for pitching to stabilise the rotor assembly in a horizontal position. The brakes used may comprise mechanical brakes applied to the rotor assembly, drive shaft, etc., or electrical brakes applied to the wind turbine generator components.

Additionally or alternatively the wind turbine blades may be initially pitched to apply a braking force to the rotor assembly. In this embodiment, the blades may be pitched in a first arrangement to slow the rotation of the blades, possibly until the rotor assembly stabilises into a substantially horizontal position, and then to pitch the blades again such that the tip ends of the blades point downwards towards the surface level, thereby lowering the centre of balance of the wind turbine blades (and any associated wind turbine hub) to prevent further rotation of the wind turbine blades from said substantially horizontal position.

In one embodiment, said step of pitching at least a portion of the swept sections of the rotor blades may present an adjusted aerodynamic profile of the rotor assembly, said adjusted aerodynamic profile operable to passively align the substantially horizontal wind turbine blades such the blades are longitudinally aligned with the wind direction at the turbine.

The use of passive longitudinal alignment of the rotor assembly with the wind direction at the turbine means that the adjusted swept-blade profile may act similar to a wind vane in aligning itself with the direction of the wind using the force of the wind itself. The rotor assembly is operable to yaw to the point of least resistance under the wind, which results in reduced wind loading experienced by the wind turbine structure.

In one embodiment, the wind turbine comprises a tower, a nacelle located at the top of said tower, a rotor hub rotatably mounted at said nacelle, a generator coupled to said rotor hub via a shaft, a pair of wind turbine blades of at least 35 metres length provided on said rotor hub, and a yaw system coupled to said nacelle, and wherein said step of aligning the substantially horizontal wind turbine blades comprises actively yawing said nacelle and said rotor hub by actuating said yaw system.

By actively yawing the blades to longitudinally align the blades with the wind direction, this provides for greater control of the wind turbine during extreme wind conditions, allowing for the rotor blade alignment to be managed based on the current conditions at the wind turbine. Such active yawing ensures accurate alignment of the wind turbine blades for all dimensions of wind turbine.

Preferably, the blade comprises a partial pitch blade having an inner blade section and an outer blade section, and wherein said step of pitching comprises pitching said outer blade section relative to said inner blade section.

Preferably, said inner blade section comprises an aerodynamic profile which is unpitched relative to said outer blade section, the unpitched aerodynamic profile of the inner blade section acting to stabilise rotation of the wind turbine blades.

As the inner blade sections have an aerodynamic profile which is unpitched, the inner blade section will be in line with the wind direction at the turbine, and will present reduced drag to the oncoming wind. This will prevent the blades from rotating at high speeds, and will increase the stability of the wind turbine blades when in the equilibrium position of the horizontal alignment.

There is also provided a wind turbine comprising
a tower,
a nacelle located at the top of said tower,
a rotor hub rotatably mounted at said nacelle,
a generator coupled to said rotor hub via a shaft, and
a pair of wind turbine blades of at least 35 metres length provided on said rotor hub, wherein the wind turbine further comprises a controller operable to implement any of the steps of the above described method.

### Description of the Invention

An embodiment of the invention will now be described, by way of example only, with reference to the accompanying drawings, in which:
Fig. 1 is a perspective view of a two-bladed partial-pitch swept-blade wind turbine according to an embodiment of the invention;
Fig. 2 is a top plan view of the wind turbine of Fig. 1; and
Fig. 3 is a front plan view of the wind turbine of Fig. 1 operating according to the method of the invention.

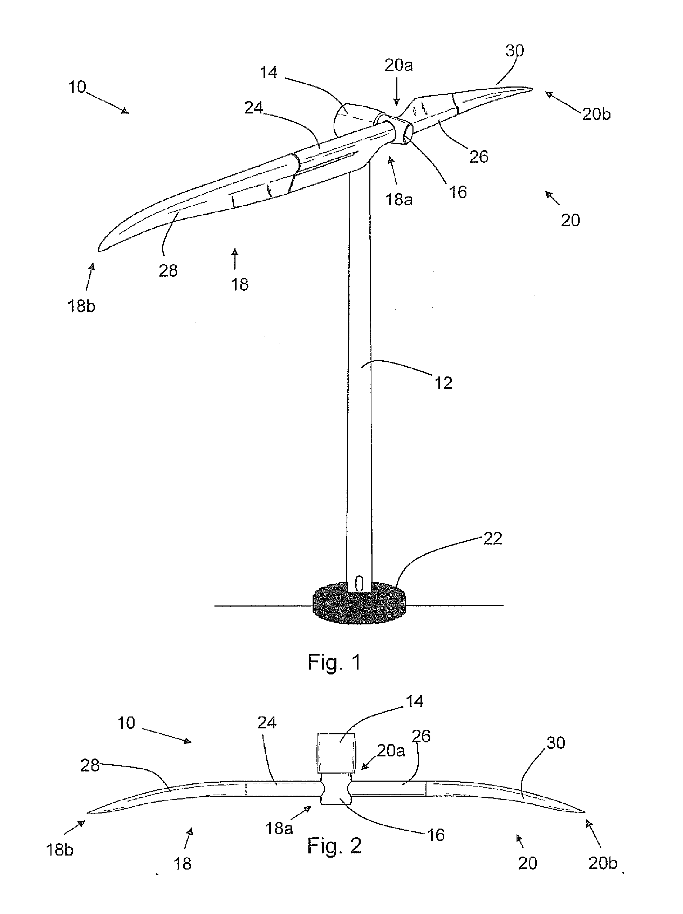

With reference to Figs. 1 and 2, a swept-blade partial-pitch two-bladed wind turbine is indicated generally at 10. The wind turbine 10 comprises a wind turbine tower 12, a nacelle 14 provided at the top of said tower 12, and a rotor hub 16 provided at said nacelle 14. First and second partial pitch rotor blades 18,20 are provided on opposite sides of said rotor hub 16. In Fig. 1, the tower 12 is shown provided on a wind turbine base 22, which may comprise any suitable wind turbine foundation. It will be understood that while the illustrated embodiment describes the use of the invention for an on-shore wind turbine, it will be understood that the invention may equally apply to wind turbines for use in an off-shore environment.

The first and second partial pitch rotor blades 18,20 each comprise a blade body having a root end 18a,20a mounted to said rotor hub 16 and a distal tip end 18b,20b. The rotor blades 18,20 comprise respective inner blade sections 24,26 provided at said root ends 18a,20a, and respective outer blade sections 28,30 provided at said tip ends 18b,20b. The rotor blades 18,20 further comprise a pitch system (not shown) provided in each blade at the junction between the inner blade sections 24,26 and the outer blade sections 28,30.

The pitch system is operable to pitch the outer blade sections 28,30 relative to the inner blade sections 24,26. In Figs. 1 and 2, the rotor blades 18 are shown unpitched (i.e. the outer blade sections 28,30 are pitched at a 0 degree pitch angle).

As can be seen in Fig. 2, the wind turbine blades 18,20 of the wind turbine 10 are forward-swept wind turbine blades, in that the blades are shaped such that the tip ends 18b,20b of the blades 18,20 point away from the wind turbine tower 12 (the tip ends of the blades are swept relative to the central longitudinal axis of the blades). Such forward-swept blades can be used in wind turbines to ensure that there is an adequate tip-to-tower ratio for operation of the wind turbine.

It will be understood that the invention may equally apply to any swept-blade wind turbine configuration, e.g. back-swept wind turbine blades (wherein the tip ends of the blades point towards the wind turbine tower).

The wind turbine 10 further comprises a controller (not shown) which is operable to implement a safety shutdown procedure in the event of extreme wind conditions. Such a controller may be a self-contained control device provided in the wind turbine structure, and/or may be communicatively coupled to a remote control station capable of managing the wind turbine operation from a remote location.

Dependent on the prevailing wind conditions in a region, the design considerations of the wind turbine structure may be altered accordingly. By an extreme wind condition, it will be understood that this refers to very high wind speeds which can occur in the vicinity of the wind turbine tower, and for which said wind turbine towers and foundations must be designed to cope with adequately. In particular, the International Electrotechnical Commission (IEC) specifies extreme wind conditions as wind shear events, as well as peak wind speeds due to storms and rapid changes in wind speed direction. A wind turbine is expected to withstand extreme wind conditions of a specified wind speed to qualify as a particular class of IEC turbine (for example, an extreme wind of 70 m/s wind speed is currently specified for an IEC Class I turbine).

It will be understood that the definition of such extreme wind conditions may depend on several factors, e.g. the maximum wind speed rating for the desired class of wind turbine, and/or the wind speed which would be classified as a once in 10/50/100 years event (relative to the normal prevailing wind conditions at the wind turbine site).

For most regions in Europe, a wind speed of greater than 20 metres per second (m/s) may be regarded as an extreme wind condition. However, in typhoon- or hurricane-prone regions in Asia, such a turbine may need to be rated to withstand winds of up to 70 m/s. Thus, the design of the turbine structure may involve more use of reinforcement elements. For such a reinforced turbine, an extreme wind condition may be at a higher level than in the case of a European-based turbine. In general, a weather system comprising sustained winds of at least 33 metres per second (or 119 km/hour) is classified as a typhoon or hurricane.

In the event of a detected or forecast extreme wind condition, the wind turbine controller is operable to pitch the outer blade sections 28,30 in a particular manner that will allow the wind turbine blades 18,20 to align and stabilise in a substantially horizontal position.

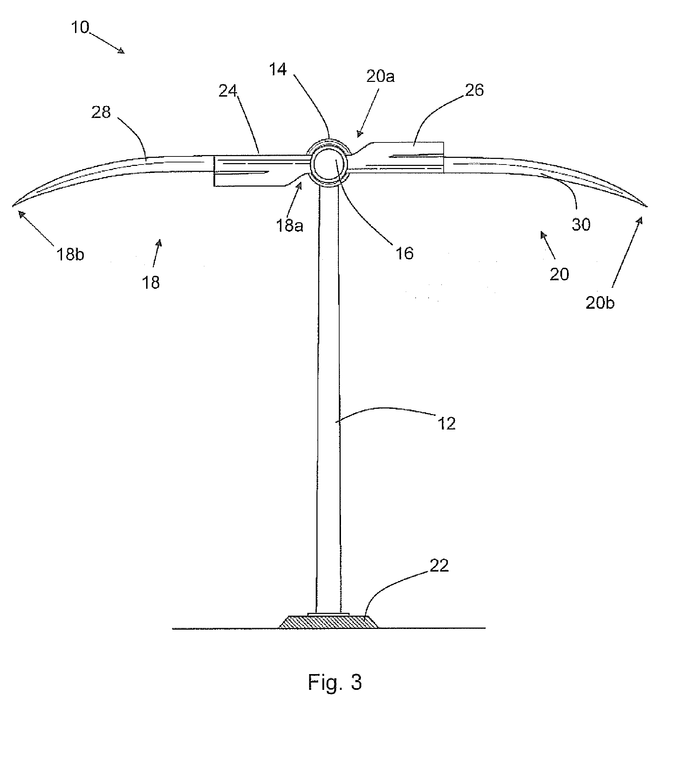

With reference to Figs. 3, it can be seen that the outer blade sections 28,30 of the wind turbine blades 18,20 are pitched such that the tip ends 18b,20b of the blades 18,20 point in opposite directions along the path of rotation of the blades 18,20. This may be accomplished by pitching the first outer blade section 28 by a pitch angle of approximately +90 degrees, and pitching the second outer blade section 30 by a pitch angle of approximately -90 degrees (or +270 degrees).

Due to the swept-blade design of the blades 18,20, by pitching the blade sections in this manner the centre of mass of the wind turbine rotor assembly comprising the blades 18,20 and the rotor hub 16 is moved from the normal position close to the pivot point of the rotor hub 16. In a perfectly balanced wind turbine, the centre of mass will be found at the pivot point of the turbine rotor assembly. However, it will be understood that certain wind turbine designs may result in a centre of mass offset from the pivot point. This may be due to blade design choices and/or manufacturing variations (e.g. uneven distribution of laminates during blade construction, etc.). Accordingly, the pitch angles of the blade sections may be adjusted to account for such variations, to ensure that the rotor assembly is balanced in said substantially horizontal alignment.

The movement of the centre of mass results in an unbalanced rotor assembly, which will stabilise to a position where the centre of mass of the rotor assembly is lowest, i.e. the substantially horizontal position indicated in Fig. 3, where the tip ends 18b,20b of the blades 18,20 point in a downwards direction towards the surface level. A further consequence of the lowered centre of mass is that the rotor assembly is well balanced in the substantially horizontal position, and is more resistant to rotation of the blades 18,20 than a normal rotor assembly having a centre of mass at or adjacent the pivot point of the rotor assembly.

By a substantially horizontal alignment, it will be understood that the blades 18,20 are arranged to be substantially parallel to the ground level (or sea level) relative to the wind turbine, e.g. +/- 5 degrees. This is preferably in line with the wind direction at the turbine.

When the blades 18,20 are horizontally aligned, the wind turbine 10 is operable to detect the current wind direction at the turbine, and to yaw the rotor assembly of the wind turbine (comprising the wind turbine blades 18,20 and the rotor hub 16, provided on the nacelle 14) such that the tip end 18b of one of the wind turbine blades 18 is pointed in the direction that the current wind is coming from, e.g. if the wind is detected to be South Westerly, the wind turbine blades 18,20 are actively yawed using the turbine yaw mechanism (not shown) until the blades 18 are aligned with the wind direction, such that one of the tip ends 18b will point in a South Westerly direction, and the opposed tip end 20b points in a North Easterly direction.

It will also be understood that the step of longitudinally aligning the blades 18,20 with the wind direction at the turbine 10 may be performed in parallel with, or before, the above described pitching step. In such a case, the rotor assembly of the wind turbine may be yawed such that the plane of rotation of the wind turbine blades 18,20 is in parallel with the wind direction at the turbine 10.

Additionally or alternatively, it will be understood that the pitching of the outer blade sections 28,30 to provide the rotor assembly in said horizontal alignment may provide an adjusted aerodynamic profile of the rotor assembly, said adjusted profile operable to passively align the wind turbine blades 18,20 with the oncoming wind direction at the wind turbine 10. In this regard, the pitched swept blades may act similar to a wind vane, which will be moved by the force of the wind to point an end of the rotor assembly into the current wind direction.

As the blades 18,20 are longitudinally aligned with the direction of the wind, the surface area of the blades 18,20 presented to the wind is minimised (when compared with the situation when the wind may be acting on the surface along the entire longitudinal length of the blade). As the surface area is minimised, accordingly the load forces experienced by the wind turbine structure due to the extreme wind are also minimised. This leads to a reduction in the extreme loads experienced by the wind turbine 10. An advantage of such a reduction in extreme loads is that the construction requirements for the wind turbine structure may also be reduced, resulting in less manufacturing cost and effort.

In a preferred embodiment, the wind turbine blades 18,20 are actively yawed to longitudinally align the plane of the rotational path of the blades 18,20 with the wind direction at the turbine 10, e.g. using the wind turbine yaw mechanism. As the blades 18,20 are actively yawed to point into the wind direction, this ensures that the blades 18,20 will be accurately aligned with the wind direction at the turbine 10, regardless of turbine size and/or blade balancing.

It will be understood that the wind turbine 10 may comprise any suitable devices for determining wind speed, e.g. an anemometer, and wind direction, e.g. a wind vane provided on the wind turbine structure. Additionally or alternatively, the wind turbine 10 is operable to receive information regarding a forecasted wind direction for the turbine, and to yaw the wind turbine blades 18,20 to align with said forecasted wind direction, e.g. in anticipation of extreme wind speeds from the forecasted direction.

The system may be relatively easily implemented in existing wind turbine control systems, which will normally comprise a controller (which may be local to the wind turbine site, or controlled from a remote control centre) operable to interface with the blade pitch systems, to provide a single control signal to the pitch systems to coordinate the pitching of the blades. In the event of activating the safety shutdown procedure, the controller is operable to introduce an offset of +/- 180 degrees to the control signal sent to one of the pitch systems. Accordingly, while a first blade will be pitched to approximately +90 degrees, with the control signal for the first blade indicating a pitch angle for the pitch system of +90 degrees, the second blade will be pitched to approximately -90 (or +270) degrees, as the control signal transmitted by the controller will be -90/+270 degrees. This relatively simple modification of controller output can provide for ease of implementation of the method of the invention in existing wind turbine controller and pitch system configurations.

In a further enhancement of the invention, the controller may be operable to adjust the weight distribution of the rotor assembly in order to stabilise the rotor assembly in a substantially horizontal arrangement. For example, weights provided within the body of the wind turbine blades may be adjusted in position (e.g. moveable weights provided on a suitable adjustable pinion mechanism), or fluids may be pumped into chambers or cavities provided in the rotor assembly from a suitable reservoir or liquid source (e.g. the surrounding ocean in an off-shore turbine). Such weight adjustment can act to increase the inertia of the rotor assembly and/or lower the centre of mass of the rotor assembly, and thereby make the rotor assembly more resistant to rotation from the stable horizontal equilibrium position.

It will be understood that a moderate braking force may be applied in parallel with the above method to supplement the stabilisation of the wind turbine blades in a substantially horizontal position. Additionally or alternatively, an initial braking force may be applied to the wind turbine blades to slow the rotation of the blades to a speed at which the above described pitching of the safety shutdown procedure may be performed. In a particular embodiment, the pitching of the wind turbine blades to lower the centre of mass of the rotor assembly may be performed once the rotor blades have been brought to a halt, preferably in a substantially horizontal position, e.g. by applying a braking mechanism to the rotor assembly and/or connected shaft. The braking force may comprise any suitable electrical and/or mechanical brakes, and/or the blades themselves may be initially pitched to a pitch angle operable to slow the rotation of the wind turbine blades.

While the present embodiment describes the use of the invention for a partial pitch wind turbine, it will be understood that the invention may apply to any suitable two-bladed swept-blade wind turbine configuration (e.g. having full-pitch blades, the pitch systems for said blades provided at the rotor hub), and is not limited to a partial pitch wind turbine.

The positioning of the wind turbine blades in line with the wind direction, both in terms of the rotational angle and the yaw angle of the blades, means that the surface area of the rotor assembly exposed to the oncoming extreme winds is minimised, and the resultant extreme wind loads on the rotor assembly and wind turbine structure are reduced. This allows for a re-dimensioning of the components required for the particular wind turbine construction, resulting in a corresponding saving in wind turbine costs. The alignment of the pitched wind turbine blades to lower the centre of mass of the rotor assembly provides a stable configuration of the rotor assembly, as the assembly is more resistant to being rotated from said horizontal position.

The invention is not limited to the embodiment described herein, and may be modified or adapted without departing from the scope of the present invention.

## Claims

1. A method for reducing wind loads in a pitchable two-bladed swept-blade wind turbine during extreme wind conditions, the wind turbine comprising a rotor assembly operable to rotate about a pivot point, the rotor assembly having a rotor hub and first and second wind turbine blades of at least 35 metres length mounted to said rotor hub, wherein the tip ends of the wind turbine blades are swept relative to the central axis of the blades, the method comprising the steps of:
providing the wind turbine blades in a substantially horizontal alignment; wherein said step comprises pitching at least a portion of the swept sections of the rotor blades to move the centre of mass of the rotor assembly relative to the pivot point for the rotor assembly, such that the rotor assembly will stabilise in an equilibrium position wherein said rotor blades are in a substantially horizontal alignment and wherein the centre of mass of said rotor assembly is lowered relative to the pivot point of said rotor assembly when in said substantially horizontal alignment; and
aligning the substantially horizontal wind turbine blades such the blades are longitudinally aligned with the wind direction at the turbine to reduce the extreme wind loads experienced by the wind turbine blades.

2. The method of claim 1, wherein said step of pitching comprises pitching the blades such that the tip ends of the blades point in substantially opposite directions along the rotational path of the wind turbine rotor blades.

3. The method of claim 2 wherein said wind turbine comprises first and second pitch systems operable to pitch at least a portion of said first and second wind turbine blades respectively and wherein the wind turbine further comprises a controller operable to control said first and second pitch systems to pitch at approximately equivalent pitch angles, and wherein said step of pitching comprises applying an offset of approximately +/- 180 degrees to said second pitch system.

4. The method of any preceding claim, wherein the wind turbine comprises a first blade having a first swept tip end and a second blade having a second swept tip end, and wherein the step of pitching comprises pitching said first blade such that said first swept tip end has a pitch angle of between approximately 85 to 95 degrees and pitching said second blade such that said second swept tip end has a pitch angle of between approximately -85 to -95 degrees.

5. The method of any preceding claim, wherein the method further comprises the step of adjusting the weight distribution of the rotor assembly to stabilise the rotor assembly in a substantially horizontal arrangement.

6. The method of any preceding claim, wherein the method further comprises the step of initially applying a braking force to a rotating rotor assembly to reduce rotational momentum of the rotor assembly, and wherein said step of pitching is performed when the rotational speed of the wind turbine blades falls below a pre-defined limit speed.

7. The method of any preceding claim, wherein said step of pitching at least a portion of the swept sections of the rotor blades may present an adjusted aerodynamic profile of the rotor assembly, said adjusted aerodynamic profile operable to passively align the substantially horizontal wind turbine blades such the blades are longitudinally aligned with the wind direction at the turbine.

8. The method of any preceding claim, wherein the wind turbine comprises a tower, a nacelle located at the top of said tower, a rotor hub rotatably mounted at said nacelle, a generator coupled to said rotor hub via a shaft, a pair of wind turbine blades of at least 35 metres length provided on said rotor hub, and a yaw system coupled to said nacelle, and wherein said step of aligning the substantially horizontal wind turbine blades comprises actively yawing said nacelle and said rotor hub by actuating said yaw system.

9. The method of any preceding claim, wherein the blade comprises a partial pitch blade having an inner blade section and an outer blade section, and wherein said step of pitching comprises pitching said outer blade section relative to said inner blade section.

10. A wind turbine comprising
a tower,
a nacelle located at the top of said tower,
a rotor hub rotatably mounted at said nacelle,
a generator coupled to said rotor hub via a shaft, and
a pair of wind turbine blades of at least 35 metres length provided on said rotor hub, wherein the wind turbine further comprises a controller operable to implement the steps of any one of claims 1-9.
